# EUROPEAN PATENT APPLICATION

(11) **EP 3 131 323 A1**
(43) Date of publication of application: **15.02.2017**
(21) Application number: 16183525.1
(22) Date of filing: 10.08.2016
(51) Int. Cl.: H04W 12/04, H04W 84/12, H04W 84/18

(54) **PEER-TO-PEER ENABLED ACTIVATION**

(30) Priority: 14.08.2015 US 201514827005
(71) Applicant: Google Inc., Mountain View, CA 94043 (US)
(72) Inventor: PAIVA, Joao Paulo, Mountain View, CA California 94043 (US); BROWN, Benjamin Nevin, Mountain View, CA California 94043 (US); PICKARD, Bethany, Mountain View, CA California 94043 (US); BUTLER, Triona, Mountain View, CA California 94043 (US)
(74) Representative: Betten & Resch

(57) **Abstract**

Methods, systems, and apparatus, including computer programs encoded on a computer storage medium, for peer-to-peer device activation. In one aspect, a method includes receiving, at a first user device associated with a first user account, an invitation to claim a second user device. Accepting, by the first user device, the invitation to claim the second user device. In response to accepting the invitation to claim the second device, sending a request for a registration token that includes a unique identifier for the second user device and associated with the first user account. Receiving, in response to the request, the registration token over the second communication protocol. Transmitting, from the first user device to the second user device, the registration token, wherein the registration token, upon receipt by the second user device, is used by the second user device to associate the second user device with the first user account.

## Description

### BACKGROUND

This specification relates to peer-to-peer enabled activation.

Wireless devices have increasingly become a tool for productivity, entertainment, and as a manner of staying constantly connected to the internet of things. Many people own multiple wireless devices that provide overlapping service functions, but are used for different purposes. Wireless devices typically transmit and receive data through a wireless network. For example, a wireless device can transmit data to a local device via a wireless communication protocol.

### SUMMARY

This specification describes technologies relating to peer-to-peer enabled activation for user devices.

In general, one innovative aspect of the subject matter described in this specification can be embodied in methods that include the actions of receiving, at a first user device associated with a first user account, an invitation to claim a second user device, the invitation received from a broadcast signal transmitted from the second user device according to a first communication protocol. Accepting, by the first user device, the invitation to claim the second user device. In response to accepting the invitation to claim the second device, sending according to a second communication protocol different from the first communication protocol, a request for a registration token that includes a unique identifier for the second user device and associated with the first user account. Receiving, in response to the request, the registration token over the second communication protocol. Transmitting, from the first user device to the second user device according to the second communication protocol, the registration token, wherein the registration token, upon receipt by the second user device, is used by the second user device to associate the second user device with the first user account. Other embodiments of this aspect include corresponding systems, apparatus, and computer programs, configured to perform the actions of the methods, encoded on computer storage devices.

Particular embodiments of the subject matter described in this specification can be implemented so as to realize one or more of the following advantages. A user device is configured to access a user profile, one or more accounts, and/or one or more networks prior to purchasing the device or removing the device from its original retail packaging. The user device can access and engage a network, a user profile, and/or a user account without manually entering authentication credentials.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

Fig. 1 is a diagram of an example environment in which the peer-to-peer activation system is utilized.
Fig. 2 is an illustration of a mobile device displaying a dialog.
Fig. 3 is a sequence diagram illustrating a peer-to-peer activation process.

Like reference numbers and designations in the various drawings indicate like elements.

### DETAILED DESCRIPTION

### Overview

The systems and methods described below relate to peer-to-peer enabled activation for user devices. In operation, peer-to-peer enabled activation for devices allows a user device to claim a target device via a wireless communications protocol. The user device and the target device engage in a direct or indirect relationship. Peer-to-peer enabled activation can activate a target device prior to purchasing the target device. In particular, peer-to-peer enabled activation allows the user device and the target device to couple (e.g., pair) and communicate while the target device is still in its original retail packaging.

In some implementations, the target device can be activated while the device is still in its original retail package. For example, the target device can transmit an offer to "claim" or activate the target device to the user device. Upon acceptance of the offer to claim the target device, the target device is associated with at least one user profile of the user device. Further, the target device is configured to work with similar networks and devices that the user device is configured. These features and additional features are described in greater detail below.

### Example Operating Environment

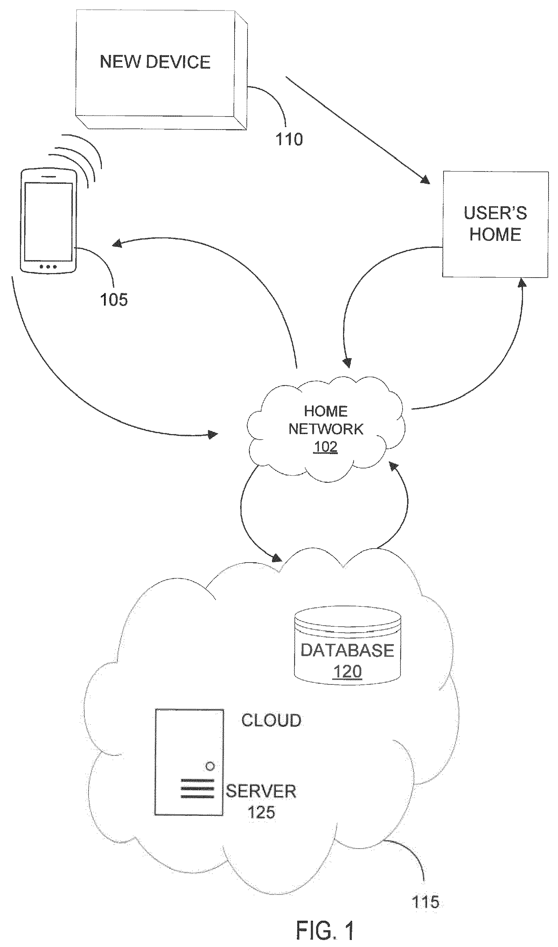

Fig. 1 is a diagram of an example environment 100 in which a peer-to-peer activation system is utilized. In particular, a user device can claim a target device utilizing a communication protocol. In some implementations, the environment 100 includes a computer network 102, such as a local area network (LAN), wide area network (WAN), the Internet, or a combination thereof, a user device 105, a target device 110, a cloud resources 115, data 120, a server 125, and a user's home 130.

A peer-to-peer activation process can enable the target device 110 to utilize one or more user accounts through a claiming process with the user device 105. Associating the target device 110 with the user device 105 can permit the target device access to the one or more user accounts prior to removing the target device 110 from its original retail packaging. For example, once the target device 110 reaches the user's home 130, the target device 110 is configured to access and use the user's home's internet network. This has the advantage that a manual configuration of the target device is not necessary and that the target device may be used promptly in the user's environment including for example one or more user accounts and the user's home's internet network.

A network includes one or more communication protocols to transmit and receive data. In some implementations, a network 102 includes communication protocols such as a cellular network (e.g., 3G, 4G, LTE, etc.), a wireless local area network (e.g., 802.11 a, b, g, n, etc.), Bluetooth, near-field communication (NFC), a wired network connection and other suitable communication protocols of the like.

Both the user device 105 and target device 110 are electronic devices that are under capable of requesting and receiving resources stored in the memory of the user device, target device and/or over the network 102. Example user devices 105 include personal computers, mobile communication devices, mobile computing devices, mobile audio devices and other devices that can send and receive data over the network 102. Example target devices also include such devices, and may also include other devices such a wireless routers, wireless printers, wireless access points, etc.

The user device 105 typically include a user application, such as a web browser and/or a utility application to facilitate sending and receiving data over the network 102. The web browser and/or the utility application can enable a user to display and interact with text, images, videos, music and other information typically located on the utility application or a web page at a website on the World Wide Web or a local area network.

Cloud resources 115 include a cloud computing environment that enables the online use of one or more computer resources and/or services. In some implementations, computer resources include servers 125, data 120 and software networks to enable access to an organized data collection

Database 120 is typically a memory or data storage mechanism to store an organized collection of data. In some implementations, a data repository includes databases or any other large capacity data storing mechanism with a structure to categorize and organize data.

A server 125 is typically a running instance of an application that can receive requests and send response to the requests. In some implementations, a server 125 provides an interface between a user device and at least one database.

### Target Device Discovery

As shown in Fig. 1, a user device 105 engages cloud resources 115 and a target device 110 through a communication protocol to send and receive data relating to a peer-to-peer enabled activation. In the example described below, the user device 105 is a mobile device that is typically carried with a person

The user device 105 is associated with a user profile. A user profile can be a collection data for one or more different user accounts. In some implementations, a user account includes individual arrangements for one or more different entities for which a user has personalized access. A user account can be linked to computer applications, internet-based applications, financial institution or any other personalized entity. For example, an account can be related to a personalized social media space, a corporate network, an online account, and/or a technology account.

Typically, an account is accessed with some form of authentication credentials that include an identifier and unique resource that is private (e.g., a password). Authentication verifies that the user or entity that wishes to gain access to the account is either the rightful owner of the account or has permission to access the account. In some implementations, a form of authentication includes a username and password, a security token, an authorization key, or some other mechanism to prove the identity of the user or entity seeking access.

Generally, a user device 105 can retain the authentication credentials for the user accounts with which the user device 102 is associated with. In some implementations, the authentication credentials are retained according to the user's discretion or a system's protocol. For example, typically when a user device connects to a secured wireless network for the first time, the user device remembers the password or key originally used to gain access to the secured wireless network. Retaining authentication credentials eliminates the need for a user to reenter the password for familiar networks each time the device requests permission to access the network.

Typically, while the target device 100 is inside of its original retail packaging, the target device 110 will operate according to its factory settings. In some implementations, the target device is in an operational configuration similar to the configuration the target device is in at the time it leaves its manufacturing entity. For example, the device can be functioning in an initial start-up setting. This occurs when the target device 110 has not been used by a user for the first time (or has been reset back to its factory settings after being used by a user). In the examples described below, the target device 110 is in its original retail packaging. For example, the target device 110 may be in the described condition below while being displayed in a retail environment such as a grocery store, an electronic store, or other suitable retail locations.

The factory settings of the target device enable a beacon mode. The beacon mode is a setting that causes the target device to emit a communicative signal that can be received by another device (e.g., the user device 105). In beacon mode, the target device 110 is searching for another device to pair with. As previously discussed, pairing is when two or more devices become communicatively coupled through a communication protocol so that data can be sent and received between the two or more devices.

In operation, if the user device 105 and the target device 110 operate according to a common communication protocol, the user device and the target device can pair together. In some implementations, the user device 105 and the target device 110 can communicate via a communication protocol such as Bluetooth, Wi-Fi, near-field communication (NFC), audio signals and/or a telecommunications network. For example, the user device 105 and the target device 110 can pair via NFC when the two devices come within a close proximity (e.g., typically within 13 centimeters or less) of each other.

The user device 105 and the target device 110 can engage in a pairing process. The pairing process allows the user device 105 and the target device 110 to become communicatively coupled, which enables data to be transmitted between the user device 105 and the target device 110. The user device 105 can pair (e.g., by the pairing process) with the target device 110 while the target device is still in its original retail packaging. The user device 105 can activate a discover setting that searches for other devices that are in beacon mode. Upon discovering the target device 110 via the target device's emitted communicative signal, the user device 105 pairs with the target device. For example, the target device is in beacon mode and is emitting an NFC signal. The user device 105 can be placed on or near the original retail packaging of the target device 110. The two devices can recognize each other and initiate the pairing process.

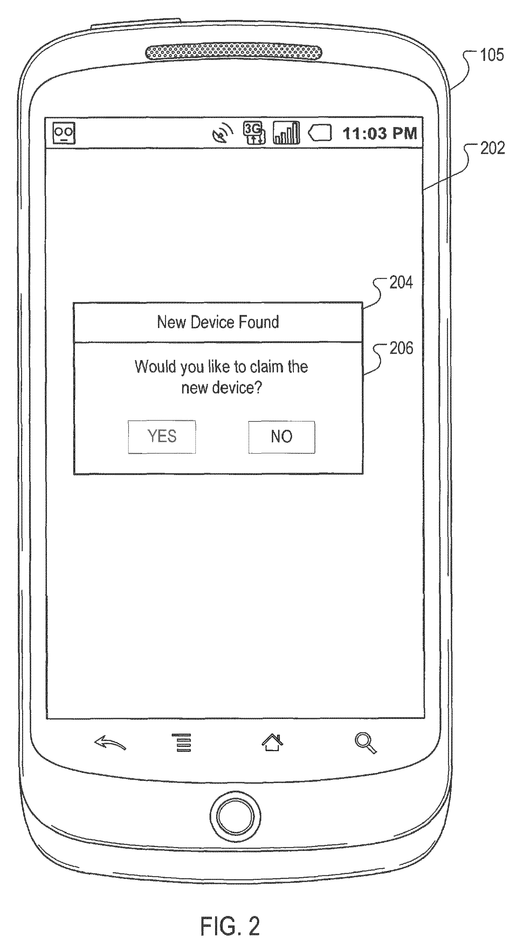

As shown in Fig. 2, the user device 105 can run a user application 204. The user application 204 can provide a user interface to guide a user through the pairing process and the peer-to-peer activation process. Upon completion of the pairing process, the peer-to-peer activation process can commence and the user device can receive an invitation 206 to claim the target device 110.

A target device 110 is in beacon mode so that a user planning to purchase the target device 110 can claim the target device. Typically, claiming the target device 110 can associate the target device 110 with the user's user profile and the accounts associated with the user profile prior to purchasing the target device 110. For example, a user profile may have one or more social media accounts linked to it, or network access credentials for a network specified for it. Claiming the target device 110 in a retail environment prior to unpacking by the user can associate the one or more social media accounts with the target device 110, or enable the target device to access the network.

Claiming the target device while the target device 110 is in the packaging results in the target device 110 to be able to be removed from the retail packing in a "ready-to-use" form. For example, if the target device 110 is a tablet and the user device is a compatible mobile phone (e.g., both utilize Android OS), claiming the target device 110 will cause one or all of the user applications that are installed on the user device 110 to be automatically downloaded and installed on the target 110. Further, authentication credentials that correspond to each installed user application will also be transmitted to the device such that the first time a user engages the user device, a user application will open and operate without having to enter in authenticating credentials.

The user device 105 may be associated with all of the user profile accounts or the user device 105 may be associated with some of the user profile accounts.

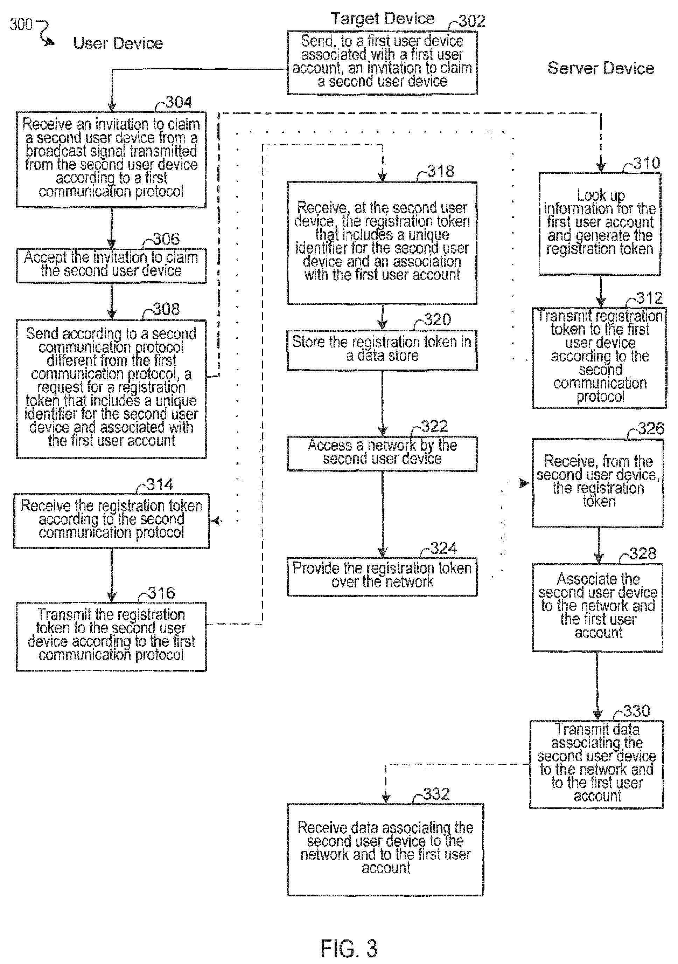

The user device 105 generates, in response to detecting a target device 110, generates an invitation 206 to claim the target device 110. If the user decides to accept the invitation 206 to claim the target device 110, the user device 105 and the target device 110 can initiate a claiming process. In some implementations, the target device 110 is controlled remotely from a set of instructions transmitted over the network. Further details describing the claiming process will be discussed in greater detail in connection with Fig. 3. If the user decides to decline the invitation, the target device 110 can remain in beacon mode so that it can be discovered by other user devices 105.

The target device 110 may remain temporarily claimed by the user device 105 and will remain in this state until either a claiming completion event occurs, or until a timeout occurs. For example, after a predetermined amount of time has lapsed, the claim of the target device 110 will revert to an unclaimed state. In some implementations, a completion of claiming the target device 110 can be accomplished by engaging the power button or home button on the target device 110, entering into a known network and associating the target device 110 with the known network, accessing an online portal after the purchase of the user device and completing an online registration process by entering a code into the target device 110 received from the online registration process, or any other mechanism that indicates that the user has purchased the user device and is the rightful property of the user. A temporary claim state allows for reversion for inadvertent or improper claims that may occur when the target device is in a retail setting. The temporary claim state thus enhances resilience of the method against misuse and avoid unintended spread of user data to devices that have been claimed inadvertently or improperly.

### Peer-to-Peer Activation Process

As previously described, claiming a target device 110 by a user device 105 associates a target device 110 with one or more user accounts that are associated with a user of the user device 105 prior to unpacking the target device 110. Fig. 3 is a sequence diagram illustrating a peer-to-peer activation process 300. The peer-to-peer activation process can provide an authentication mechanism to verify a user's credentials during the claiming process. In some implementations, the peer-to-peer activation process can more than two devices. For example, the peer-to-peer activation process can involve the user device 105, the target device 110, and the server 125.

As previously described, a user can initiate the pairing process by placing the user device 105 on or within close proximity of the retail packaging of the target device 110. The proximity may be dependent on the protocol used. For example, some protocols may only have an active range of a meter or less. Upon initiation of the pairing process, the peer-to-peer activation process can begin by sending an invitation to claim a second user device (e.g., the target device 110) from the second user device to a first user device (e.g., the user device 105) (302). In addition, the first user device is typically associated with a first user account (e.g., a bank account, social media account, etc.). The first user device receives the invitation to claim the second user from a broadcast signal transmitted from the second user device according to a first communication protocol (e.g., Bluetooth, Wi-Fi, near-field communication (NFC), audio signals and/or a telecommunications network) (304).

The first user device accepts the invitation to claim the second user device (306) and sends a request for a registration token that includes a unique identifier for the second user device and is also associated with the first user account (308). In some implementations, the registration token can include a network service set identification (SSID), a user account identification mechanism, a password associated with the SSID and/or the user account, or any other mechanism that can be used to authenticate credentials. This information can be stored on the user device and provided by the user device, or, alternatively, in some implementations, the request for the registration token is sent to the server 125 according to a second communication protocol (e.g., Bluetooth, WI-Fi, near-field communication (NFC), audio signals and/or a telecommunications network, etc.) that is different from the first communication protocol.

The server can look up and retrieve information for the first user account and generate a registration token (310). The server can, for example, look up and retrieve information for a user profile, which can include a collection of one or more user accounts. As previously described, the registration token is a mechanism to authenticate the credentials of a device and/or user. The server can transmit the registration token to the first user device according to the second communication protocol (312).

The first user device receives the registration token according to the second communication protocol (314). The first user device transmits the registration token to the second user device according to the first communication protocol (316). The second user device receives the registration token that includes a unique identifier for the second user device and an association with the first user account (318). In some implementations, the unique identifier gives the second user device an identifying mechanism that can be recognized by networks, user accounts, etc. The second user device stores the registration token in a data store (320).

The second user device accesses a network 102 (322). In some implementations, the network 102 may recognize the second user device via the unique identifier assigned to the second user device. For example, a network 102 such as a corporate network or home network can be configured to allow the second user device to access the network according to the second device's unique identifier. The second user device can also access the network by other conventional mechanisms (e.g., cellular connection, manually entering a service set identification and password, etc.). The second user device provides the registration token over the network (324).

The server 125 can receive the registration token from the second user device (326) and associate the second user device to the network 125 and the first user account (328). In some implementations, associating the second user device can include linking the second user device with the network 125 and other devices within the network 125, further uniquely identifying the second user device with the network 125. For example, the second user device may be added to a group of devices recognized by the network 125. In addition, associating the second user device can include transmitting data representing information for and/or about the second user device (e.g., mac address, electronic serial number, international mobile equipment indicator, etc.) to the network 125 and other devices within the network.

The server transmits data associating the second user device to the network and the first user account (330). For example, the network can autonomously transmit user information associated with the first user account and a set of data comprising information corresponding to the first user account. Upon receiving the data associating the second user to the network and the to the first user account (332), the second user device can access the network and the first user account prior to removal from the original retail packaging.

In another example, the second user device can use a cellular network to provide the registration token. Subsequently, upon associating the second user device to the network 125, the second user device can be recognized by a home network such that the second user device automatically connects to the home network the first time the second user device enters the wireless broadcast area of the home network according to the second communication protocol. In addition, the target device has received authentication credentials to access a first user account such as a social media account. Thus, after removing the second user device from the original retail packing in the user's home 130, the second user device is connected to the home network and can access the social media account without manually entering any authentication mechanisms.

### Additional Implementation Details

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's user device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a user computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include users and servers. A user and server are generally remote from each other and typically interact through a communication network. The relationship of user and server arises by virtue of computer programs running on the respective computers and having a user-server relationship to each other. In some embodiments, a server transmits data (e.g., an HTML page) to a user device (e.g., for purposes of displaying data to and receiving user input from a user interacting with the user device). Data generated at the user device (e.g., a result of the user interaction) can be received from the user device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method comprising:
receiving, at a first user device associated with a first user account, an invitation to claim a second user device, the invitation received from a broadcast signal transmitted from the second user device according to a first communication protocol;
accepting, by the first user device, the invitation to claim the second user device;
in response to accepting the invitation to claim the second device, sending according to a second communication protocol different from the first communication protocol, a request for a registration token that includes a unique identifier for the second user device and associated with the first user account;
receiving, in response to the request, the registration token over the second communication protocol; and
transmitting, from the first user device to the second user device according to the second communication protocol, the registration token, wherein the registration token, upon receipt by the second user device, is used by the second user device to associate the second user device with the first user account.

2. The method of claim 1, wherein associating the second user device with the network comprises linking the second user device and data representing information for the second user device with the network and other devices within the network, and further compromising uniquely identifying the second user device with the network.

3. The method of claim 2, wherein completion of claiming the second user device comprises at least one of the following:
engaging the second user device by a power button on the second user device;
associating the second user device with the network; and
confirming, from an online registration process and a code received from the online registration process, a final claim of the second user device.

4. The method of one of the preceding claims, wherein the first communication protocol is selected from the group consisting of Bluetooth, audio, Wi-Fi, telecommunications network, and near-field communication; and/or
wherein the second communication protocol is selected from the group consisting of Bluetooth, audio, Wi-Fi, telecommunications network, and near-field communication; and/or
wherein the first user account is selected from the group consisting of a social media network, a corporate network, an online account, and a technology account; and/or
wherein the second user device is controlled remotely from a set of instructions transmitted over the network; and/or
wherein associating the second user device with the network autonomously transmits user information associated with the first user account and a set of data comprising information corresponding to the first user account; and/or
wherein the registration token, in connection with associating the second user device to the first user account, further comprises a first set of credentials to access the first user account.

5. The method of one of the preceding claims, wherein the registration token further comprises a second set of credentials to access and utilize the network according to the second communication protocol.

6. The method of claim 5, wherein the second set of credentials is selected from the group consisting of: a service set identification, a username, a password, and a network name.

7. A system, comprising:
a first user device associated with a first user account and operatively configured to:
receive an invitation to claim a second user device, the invitation received from a broadcast signal transmitted from the second user device according to a first communication protocol;
accept the invitation to claim the second user device;
in response to accepting the invitation to claim the second device, send according to a second communication protocol different from the first communication protocol, a request for a registration token that includes a unique identifier for the second user device and associated with the first user account;
receive, in response to the request, the registration token over the second communication protocol; and
transmit, from the first user device to the second user device according to the second communication protocol, the registration token, wherein the registration token, upon receipt by the second user device, is used by the second user device to associate the second user device with the first user account.

8. The system of claim 7, wherein associating the second user device with the network autonomously transmits user information associated with the first user account and a set data comprising information corresponding to the first user account; and/or
wherein the registration token, in connection with associating the second user device to the first user account, further comprises a first set of credentials to access the first user account.

9. The system of claim 7 or 8, wherein the registration token further comprises a second set of credentials to access and utilize the network according to the second communication protocol.

10. The system of claim 9, wherein the second set of credentials is selected from the group consisting of: a service set identification, a username, a password, and a network name.

11. A method comprising:
sending, to a first user device associated a first user account, an invitation to claim a second user device, the invitation sent by a broadcast signal transmitted from the second user device according to a first communication protocol;
receiving, at the second user device and from the first user device, a registration token that includes a unique identifier for the second user device and associated with the first user account;
storing, in a data store in the second user device, the registration token;
accessing, by the second user device, a network according to a second communication protocol different from the first communication protocol;
providing, by the second user device, the registration token over the network; and
receiving, at the second user device and in response to providing the registration token, data associating the second user device to the network and to the first user account.

12. The method of claim 11, wherein the registration token, in connection with associating the second user device to the first user account, further comprises a first set of credentials to access the first user account; and/or
wherein the registration token further comprises a second set of credentials.

13. The method of claim 12, wherein the second set of credentials is selected from the group consisting of: a service set identification, a username, a password, and a network name.

14. The method of claim 13, wherein accessing the network further comprises autonomously establishing a connection with the network utilizing the second set of credentials included in the registration token.

15. The method of one of claims 11 to 14, wherein associating the second user device to the network comprises autonomously transmitting a set of data representing user information associated with the first user account and the second user device to a data store, linking the second user device to the network.
